# EUROPEAN PATENT APPLICATION

(11) **EP 4 826 414 A2**
(43) Date of publication of application: **21.10.2026**
(21) Application number: 26167707.4
(22) Date of filing: 25.03.2026
(51) Int. Cl.: G01S 17/89

(54) **POSITIONING METHODS AND DETECTION EQUIPMENT**

(30) Priority: 25.03.2025 CN 202510373354
(71) Applicant: Suteng Innovation Technology Co., Ltd., Shenzhen, Guangdong 518000 (CN)
(72) Inventor: Song, Zhiyuan, Shenzhen (CN); Fang, Yufan, Shenzhen (CN); LIU, Wenbo, Shenzhen (CN)
(74) Representative: RGTH

(57) **Abstract**

The present application discloses a positioning method and detection equipment, the positioning method is applied to the detection equipment, the detection equipment includes a laser detection module, the laser detection module obtains the point cloud data, the method comprises: determining the uncertainty of the first data point in the current frame point cloud, the first data point is any data point in the current frame point cloud; According to the first data point in the current frame point cloud and the N second data points closest to the first data point in the point cloud map, the fitting plane corresponding to the first data point is determined, in which the point cloud map is obtained based on the accumulation of historical frame point clouds collected by the detection device, and the second data point is any data point in the point cloud map, and N is an integer greater than or equal to three. Based on the uncertainty of N second data points, the uncertainty of the fitting plane corresponding to the first data point is determined.

## Description

### Technical fields

Embodiments of the present application relate to the field of positioning technology, and in particular to a positioning method and a detection device.

### Background technology

In fields such as 3D reconstruction, reliably calculating one's own position and recovering the surrounding geometry based on various sensor input signals is a fundamental and important part of the process. In 3D reconstruction, high quality positioning results ensure that the reconstructed object has sufficient geometric accuracy for further mapping.

In positioning and mapping tasks, LiDAR (Light Detection and Ranging, Lidar) and camera are two commonly used sensors, the former can obtain scene geometry information with high accuracy, and the latter can obtain scene colour and semantic information densely. Compared with pure Lidar or pure vision solutions, based on the uncertainty of their respective measurements, the organic combination of Lidar and camera measurement can effectively improve the accuracy and robustness of the positioning system in various environments.

In the current positioning and mapping scheme, all points in the point cloud collected by LiDAR are treated equally, i.e., no specific distinction is made between the errors of each point, however, in different application scenarios, the errors of different points in the point cloud may differ greatly, which leads to poor positioning accuracy.

### Specification

Embodiments of the present application provide a positioning method and a detection device that can improve positioning accuracy.

In the first aspect, the embodiment of the present application provides a positioning method applied to the detection device, the detection device includes a laser detection module, and the laser detection module is used to obtain point cloud data, and the method comprises: determining the uncertainty of the first data point in the current frame point cloud, wherein the first data point is any data point in the current frame point cloud; A ccording to the first data point in the current frame point cloud and the N second data points closest to the first data point in the point cloud map, the fitting plane corresponding to the first data point is determined, in which the point cloud map is obtained based on the accumulation of historical frame point clouds collected by the detection device, and the second data point is any data point in the point cloud map, and N is an integer greater than or equal to three. B ased on the uncertainty of N second data points, the uncertainty of the fitting plane corresponding to the first data point is determined. and the pose of the detection device is corrected according to the uncertainty of at least part of the first data point and the corresponding fitting plane.

Through the above process, the modelling of the errors in the point cloud is achieved, which can be used to correct the position of the detecting equipment, and the errors can be better quantified and corrected during the positioning process, which is conducive to the improvement of the positioning accuracy.

In one or more embodiments, determining an uncertainty of a first data point in the current frame point cloud comprises: determining a distance uncertainty of the first data point; determining an angle uncertainty of the first data point; and determining an uncertainty of the first data point based on the distance uncertainty and the angle uncertainty of the first data point.

In one or more embodiments, determining a distance uncertainty of the first data point comprises: determining a distance deviation based on the distance information of the first data point; determining a divergence angle deviation based on the distance information of the first data point and the divergence angle information; and determining a distance uncertainty of the first data point based on the distance deviation and the divergence angle deviation.

In one or more embodiments, after determining the fitting plane corresponding to the data point according to the first data point in the current frame point cloud and the N second data points closest to the data point in the point cloud map, the method also comprises: according to the preset parameters, filter out the fitting planes that do not meet the preset indicators in the set of each fitting plane to obtain the remaining fitting planes; According to the uncertainty of at least part of the first data point and the corresponding fitting plane, the pose of the detection equipment is corrected, including: according to the uncertainty of the first data point corresponding to the remaining fitting plane and the uncertainty of the corresponding fitting plane, the pose of the detection equipment is corrected.

By filtering out the fitting planes that do not meet the preset specifications, it is advantageous to retain only the high-quality fitting planes that meet the requirements for the correction of the position of the detection equipment, which not only improves the accuracy of the correction, but also simplifies the data and reduces the complexity of the subsequent processing.

In one or more embodiments, before the step of correcting the position of the detection device based on at least some of the first data points and the uncertainty of the corresponding fitting plane, the method further comprises: determining whether a degradation of the point cloud of the current frame has occurred; if the point cloud of the current frame has been degraded, not correcting the position of the detection device; if the point cloud of the current frame has not been degraded, proceeding to the step of correcting the position of the detection device based on at least some of the first data points and the uncertainty of the corresponding fitting plane. the uncertainty of the corresponding fitting plane, the step of correcting the position of the detection device.

The position of the detection equipment is corrected only when the point cloud is not degraded to avoid the drift of the correction result in the degraded direction and to improve the stability and accuracy of the positioning.

In one or more embodiments, correcting a position of the detection device based on an uncertainty of at least some of the first data points and a corresponding fitting plane comprises: configuring a point-plane constrained observation equation to be: $\left[\begin{matrix}0 \\ 0 \\ ⋮ \\ 0\end{matrix}\right] = \left[\begin{matrix}{e}_{1}^{T} {w}_{1}^{2} {e}_{1} \\ {e}_{2}^{T} {w}_{2}^{2} {e}_{2} \\ ⋮ \\ {e}_{M}^{T} {w}_{M}^{2} {e}_{M}\end{matrix}\right]$ of which. ${e}_{M}^{T}$ ase_{M} transposition of thee_{M} is the point surface error of the first matching pair of M, the first matching pair is the matching pair composed of the first data point and the corresponding fitting plane, and M is an integer greater than zero, W_{M} is the constraint weight of the first matching pair of M; According to the uncertainty of each first data point, the uncertainty of the corresponding fitting plane and the point surface constraint observation equation, the pose of the detection equipment is corrected.

In one or more embodiments, before the step of determining an uncertainty of a first data point in the current frame point cloud, the method further comprises: filtering out invalid data points and data points in a blind zone in the current frame point cloud; performing a de-distortion based on a position provided by an inertial measurement unit in the detection device; and performing a downsampling of the de-distorted current frame point cloud; wherein the first data point is a data point that is included in the current frame point cloud after filtering out the invalid data points and data points in the blind zone. The first data point is the data point included in the current frame point cloud after filtering out invalid data points and data points in the blind zone.

Filtering out invalid data points and data points in the blind zone, de-distortion and downsampling in the current frame point cloud can reduce the computational complexity of the subsequent processing and improve the quality of the point cloud, which is conducive to improving the positioning accuracy.

In one or more embodiments, after the step of correcting the position of the detection device based on at least some of the first data points and the uncertainty of the corresponding fitting plane, the method further comprises: inserting the current frame point cloud into the point cloud map to obtain an updated point cloud map.

In one or more embodiments, the detection device includes a camera module, the camera module is used for acquiring an image, and the method further includes: acquiring feature points in the current frame image; determining the visual signpost corresponding to each feature point, wherein the visual signpost is a data point whose corner response value is higher than a predetermined threshold value based on the projection of a point cloud of the historical frame to the historical frame image, and the visual signpost carries coordinate information and visual information under a world coordinate system. Determine the uncertainty of the projection point of the visual waypoint corresponding to each feature point in the current frame image; according to the uncertainty of each projection point, correct the position of the detection equipment.

Correcting the position of the detection device according to the uncertainty of each projection point can provide reasonable weights for the visual constraints, making the visual correction more stable and less susceptible to noise.

In one or more embodiments, determining a visual waypoint corresponding to each feature point comprises: back-projecting each feature point according to a position provided by an inertial measurement unit in the detection device, and determining a nearest voxel grid in which the projection ray corresponding to each feature point intersects with the visual map, wherein the visual map is a three-dimensional map based on a multi-frame image captured by the camera module; determining a visual waymark corresponding to the feature point among all the visual waymarks within the grid corresponding to each feature point. In the nearest voxel grid corresponding to each feature point, the visual roadmap corresponding to the feature point is determined.

In one or more embodiments, before the step of determining the uncertainty of the visual waypoints corresponding to each feature point, the method further comprises: determining a co-vision image frame of the current image frame, wherein the image frame is a co-vision image frame when at least one of the visual waypoints corresponding to any of the image frames is the same as that corresponding to the current frame image; obtaining a number of co-vision features of the current image frame and the co-vision image frame; determining a target co-vision image frame, wherein the number of co-vision features in the target co-vision image frame exceeds a preset threshold and belongs to a group in accordance with the number of co-vision features in the target co-vision image frame, and is in accordance with a preset threshold. obtain a number of co-vision features of the current image frame and the co-vision image frame; determine a target co-vision image frame, wherein the number of co-vision features in the target co-vision image frame exceeds a predetermined threshold value and belongs to a set of a predetermined number of co-vision image frames arranged in ascending order according to the number of co-vision features; determine a basis matrix of the current image frame and the target co-vision image frame; based on the basis matrix and the pairwise polarity constraints, filter out the outliers in the second matching pairs, wherein the second matching pair is a pair of feature points and the corresponding visual waypoints, and the second matching pair is a pair of feature points and the corresponding visual waypoints. The second matching pair is composed of feature points and corresponding visual signposts.

By eliminating the wrong second matching pairs and improving the quality of the second matching pairs, it is helpful to ensure that the subsequent position correction of the detection equipment has high accuracy and robustness.

In one or more embodiments, determine the uncertainty of the projection point of the visual road sign corresponding to each feature point in the current frame image, including: determining the first coordinate of the visual road sign corresponding to each feature point under the camera coordinate system of the camera module and the second coordinate under the image coordinate system of the current frame image, wherein the first coordinate is the three-dimensional coordinate and the second coordinate is the two-dimensional coordinate; According to the first coordinate, the second coordinate and the normalised focal length of the camera module in the U axis and V axis under the image coordinate system, the visual signpost corresponding to each feature point is determined, and the uncertainty of the projection point in the current frame image is determined.

In one or more embodiments, before correcting the position of the detection device according to the uncertainty of each projection point, the method further comprises: determining whether a degradation of the current frame image occurs; if a degradation of the current frame image occurs, not correcting the position of the detection device; and, if no degradation of the current frame image occurs, proceeding to the step of correcting the position of the detection device according to the uncertainty of each projection point.

The position of the detection device is corrected only when the image is not degraded, avoiding the drift of the correction result in the direction of degradation and improving the stability and accuracy of positioning.

In one or more embodiments, correcting the position of the detection device based on the uncertainty of each projection point comprises: configuring the visual reprojection constrained observation equation to be: $\left[\begin{matrix}0 \\ 0 \\ ⋮ \\ 0\end{matrix}\right] = \left[\begin{matrix}{e}_{1}^{T} {W}_{1}^{T} {W}_{1} {e}_{1} \\ {e}_{2}^{T} {W}_{2}^{T} {W}_{2} {e}_{2} \\ ⋮ \\ {e}_{A}^{T} {W}_{A}^{T} {W}_{A} {e}_{A}\end{matrix}\right]$ of which. ${e}_{A}^{T}$ ase_{A} transposition of thee_{A} is the reprojection error of the second matching pair of A, and the second matching pair is the matching pair composed of the feature point and the corresponding visual sign, ${W}_{A}^{T}$ is the constraint weight of the second matching pair A, ${W}_{A}^{T}$ asW_{A} The position of the detection device is corrected according to the uncertainty of each projection point and the visual reprojection constraint observation equations.

In a second aspect, an embodiment of the present application provides a detection device comprising: a laser detection module for acquiring point cloud data; a camera module for acquiring an image; an inertial measurement unit for providing a position of the detection device; a control processing unit comprising: at least one processor and a memory; the memory coupled with the processor, the memory for storing instructions or programs, and when the instructions or programs are executed by the at least one processor, causing the at least one processor to execute a positioning method as described above. When the instruction or programme is executed by the at least one processor, the at least one processor is caused to execute the positioning method as described above.

The beneficial effect of the present application is that the positioning method of an embodiment of the present application is applied to a detection device, the detection device comprising a laser detection module, the laser detection module being used to acquire point cloud data. The positioning method is capable of determining the uncertainty of a first data point and the uncertainty of a fitting plane corresponding to the first data point in the current frame of the point cloud, and correcting the position of the detection device according to at least part of the uncertainty of the first data point and the corresponding fitting plane. Thus, by modelling the errors of the point cloud for correcting the position of the detection device, the errors can be better quantified and corrected during the positioning process, which is conducive to improving the positioning accuracy.

### The accompanying illustration

One or more embodiments are illustrated exemplarily by means of pictures corresponding thereto in the accompanying drawings, and these illustrations do not configure a limitation of the embodiments, and elements having the same reference numerical designation in the accompanying drawings are indicated as similar elements.
Figure 1 is a schematic diagram of the results of a detection device provided by an embodiment of the present application; the
Figure 2 is a flowchart I of a positioning method provided by an embodiment of the present application; the
Figure 3 is a schematic diagram of a first data point provided by an embodiment of the present application on a Cartesian coordinate system versus a spherical coordinate system; the
FIG. 4 is a schematic diagram of an embodiment of step S210 shown in FIG. 2 provided by the embodiment of the present application;
FIG. 5 is a schematic diagram of an embodiment of step S410 shown in FIG. 4 provided by the embodiment of the present application;
Figure 6 shows the error variation curve provided by embodiments of the present application; the
Figure 7 is a schematic diagram of a laser beam hitting a flat surface to form an elliptical spot provided by an embodiment of the present application; the
FIG. 8 is a schematic diagram of the steps performed before the execution of step S210 shown in FIG. 2 provided by the embodiment of the present application;
Figure 9 is a flowchart II of a positioning method provided by an embodiment of the present application; the
FIG. 10 is a schematic diagram of an embodiment of step S920 shown in FIG. 9 provided by the embodiment of the present application;
FIG. 11 is a schematic diagram of an embodiment of step S930 shown in FIG. 9 provided by the embodiment of the present application;
FIG. 12 is a schematic diagram of the steps performed by the embodiment of the present application before executing step S930 shown in FIG. 9.

In order to make the purpose, technical solutions and advantages of the embodiments of the present application clearer, the technical solutions in the embodiments of the present application will be described clearly and in detail in the following in connection with the accompanying drawings in the embodiments of the present application. Obviously, the described embodiments are part of the embodiments of the present application, but not all of the embodiments. It should be understood that the specific embodiments described herein are only for the purpose of explaining the present application, and are not intended to limit the present application.

It should be noted that when an element is expressed as being "connected" to another element, it may be directly connected to the other element, or there may be one or more centred elements in between.

In addition, the technical features described below in various embodiments of the present application may be combined with each other as long as they do not conflict with each other.

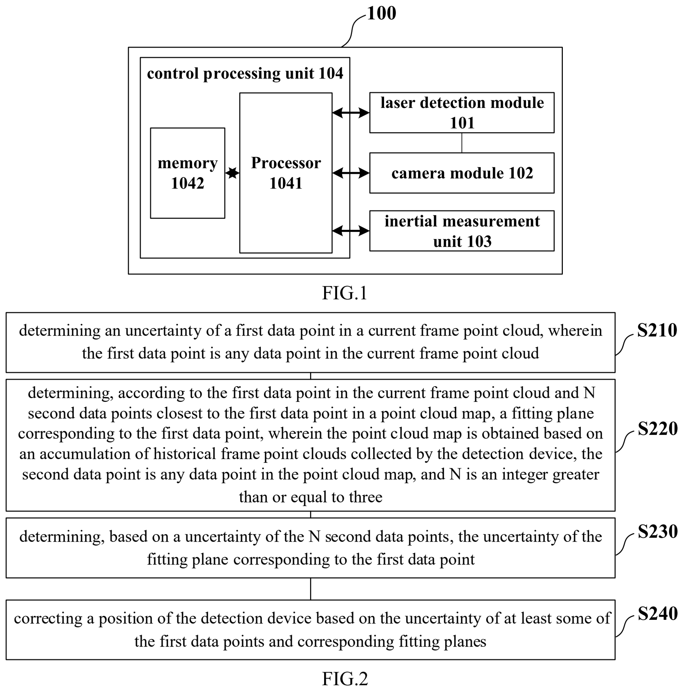

Referring to FIG. 1, shows a schematic diagram of a structure of a detection device provided by an embodiment of the present application. The detection device 100 includes a laser detection module 101, a camera module 102 and an inertial measurement unit 103.

Among them, the detection device 100 is a technical tool and system capable of sensing the surrounding environment and collecting the necessary data to determine the position of the device itself (localization) and to construct a map of the environment (mapping). Detection devices can be used in autonomous robot navigation, self-driving cars, drones and other fields to enable machines to locate themselves in unknown or dynamically changing environments and to understand the physical spatial layout of their surroundings.

The laser detection module 101 is used to acquire point cloud data. The laser detection module 101 is a device or system that uses laser technology to perform tasks such as distance measurement, object detection, and environmental scanning. The laser detection module determines distance by emitting laser pulses and measuring the time it takes for those pulses to reflect back from the surface of an object, combining the distance information and the angle at which the laser is emitted to calculate the three-dimensional coordinates of a plurality of data points to form the point cloud data. In some implementations, the laser detection module 101 is a lidar.

The camera module 102 is used to acquire images. The camera module 102 is a highly integrated optoelectronic device that integrates a lens, image sensor, image signal processor (ISP), and other necessary electronic components to capture ambient light information and convert it into digital image or video data that can be displayed, stored, or further processed.

The inertial measurement unit 103 is used to provide the pose of the probing device. T he Inertial Measurement Unit (IMU) 103 is a device used to measure the three-axis attitude angle (or angular rate) and acceleration of an object. The inertial measurement unit 103 usually consists of three single-axis accelerometers and three single-axis gyroscopes, which are used to measure linear acceleration and angular rate in three-dimensional space, respectively.

The control processing unit 104 can be used as a microcontroller unit (MCU) or a digital signal processing (DSP) controller.

The control processing unit 104 comprises at least one processor 1041 as well as a memory 1042, wherein the memory 1042 may be built-in in the control processing unit 104 or external to the control processing unit 104, and the memory 1042 may also be a remotely set up memory, connected to the control processing unit 104 via a network.

The memory 1042, as a non-volatile computer-readable storage medium, can be used to store non-volatile software programs, non-volatile computer executable programs, and modules. The memory 1042 may include a storage programme area and a storage data area, wherein the storage programme area may store an operating system, an application program required for at least one function, and the storage data area may store data created according to the use of the terminal. In addition, the memory 1042 may include a high-speed random access memory, and may also include a non-volatile memory, such as at least one disk memory device, a flash memory device, or other non-volatile solid state memory device. In some embodiments, the memory 1042 may optionally include memory that is remotely located relative to the processor 1041, and these remote memories may be connected to the terminal via a network. Examples of the networks include, but are not limited to, the Internet, an enterprise intranet, a local area network, a mobile communications network, and combinations thereof.

The processor 1041 performs various functions and processes data of the terminal by running or executing software programs and/or modules stored in the memory 1042, and by calling data stored in the memory 1042, so as to monitor the terminal as a whole, for example, to implement the positioning method described in any embodiment of the present application.

Processor 1041 can be one or more, as shown in Figure 1, using a processor 1041 as an example. P rocessor 1041 and memory 1042 can be connected via bus or other means. P rocessor 1041 can include a central processing unit (CPU), digital signal processor (DSP), application-specific integrated circuit (ASIC), controller, field programmable gate array (FPGA) device, and more. The processor 1041 can also be implemented as a combination of computing devices, such as a combination of DSP and microprocessor, multiple microprocessors, one or more microprocessors combined with DSP cores, or any other such configuration.

Referring to FIG. 2, FIG. 2 shows a flowchart of a positioning method provided by an embodiment of the present application. Wherein, the positioning method is applied to a detection device, the detection device includes a laser detection module, and the laser detection module is used to acquire point cloud data. As shown in FIG. 2, the positioning method includes the following method steps:
Step S210: Determine the uncertainty of the first data point in the current frame point cloud, where the first data point is any data point in the current frame point cloud.

Specifically, uncertainty usually refers to the difference between the measured value and the true value, including random and systematic errors. In a point cloud, the coordinates of each data point may have errors, such as the angle measurement error and the distance measurement error of LIDAR, etc. For any frame of the point cloud, the uncertainty of different data points may be the same or different. For any frame of the point cloud, the uncertainty of different data points may be the same or different. By determining the uncertainty of each data point in the current frame point cloud, the error of each data point can be determined, so as to quantify the accuracy of the position of the data point, and to provide a more reliable basis for the subsequent position correction.

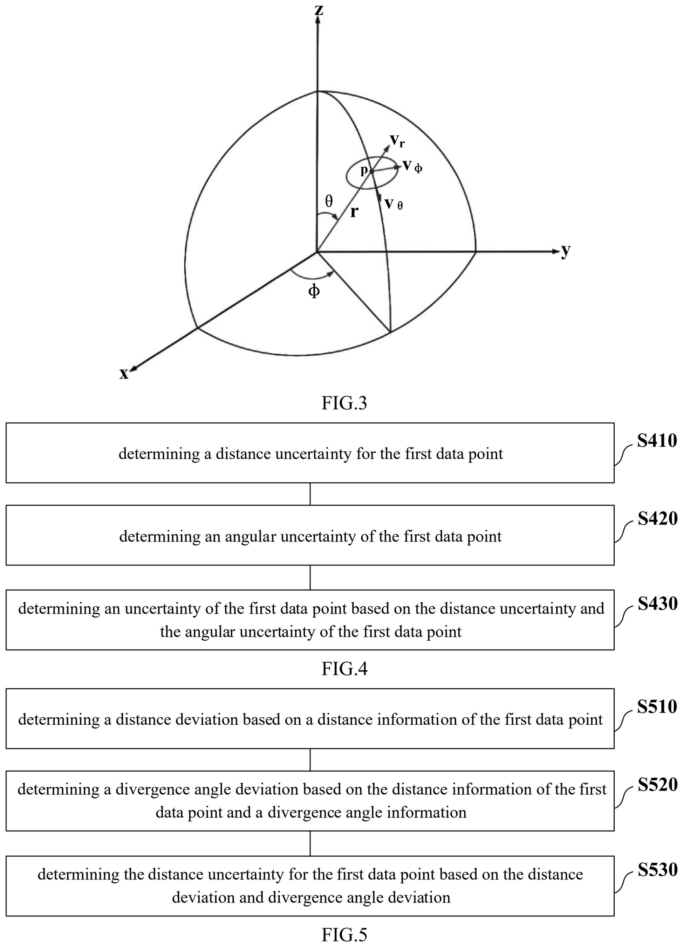

Figure 3 illustrates the first data point P[x, y, z]Schematic diagram on the Cartesian and spherical coordinate systems. First data point P[x, y, z]By the coordinates of the sphere[r, θ , ϕ]Transformations, as shown in figure 3, have the following transformational relationships: $\left[\begin{matrix}x \\ y \\ z\end{matrix}\right] = \left[\begin{matrix}rsin θ cosϕ \\ rsin θ sinϕ \\ rcos θ\end{matrix}\right] = f \left(r, θ, ϕ\right) ∘$

Taking errors into account, it is obtained that: $\left[\begin{matrix}x + {δ}_{x} \\ y + {δ}_{y} \\ z + {δ}_{z}\end{matrix}\right] = f \left(r+{δ}_{r}, θ+{δ}_{θ}, ϕ+{δ}_{ϕ}\right) \approx f \left(r, θ, ϕ\right) + J \left(\begin{matrix}r , θ \\ , ϕ\end{matrix}\right) \left[\begin{matrix}{δ}_{r} \\ {δ}_{θ} \\ {δ}_{ϕ}\end{matrix}\right] ∘$

Among them. δₓ, δ_{y} with δ_{z} The errors of the x-axis, y-axis and z-axis, respectively,J(r, θ , ϕ)as[x, y, z]Right[r, θ , ϕ]of the Jacobi matrix, expressed as: $J \left(r, θ, ϕ\right) = \left[\begin{matrix}sin θ cosϕ & rcos θ cosϕ & - rsin θ sinϕ \\ sin θ sinϕ & rcos θ sinϕ & rsin θ cosϕ \\ cos θ & - rsin θ & 0\end{matrix}\right] ∘$

Considering that the measurement errors are relatively independent in the spherical coordinate system, the uncertainties can be modelled separately as mutually independent normal distributions, which can be obtained as follows: $\left[\begin{matrix}δ r \\ δ θ \\ δ ϕ\end{matrix}\right] ∼ N \left(\left[\begin{matrix}{μ}_{r} \\ {μ}_{θ} \\ {μ}_{ϕ}\end{matrix}\right], \left[\begin{matrix}{σ}_{r}^{2} & 0 & 0 \\ 0 & {σ}_{θ}^{2} & 0 \\ 0 & 0 & {σ}_{ϕ}^{2}\end{matrix}\right]\right) = N \left({μ}_{r θ ϕ}, {Σ}_{r θ ϕ}\right) ∘$

Then, the uncertainty in the Cartesian coordinate system can be expressed as follows: $\left[\begin{matrix}δ x \\ δ y \\ δ z\end{matrix}\right] ∼ N \left(J {μ}_{r θ ϕ},J {Σ}_{r θ ϕ}{J}^{T}\right) ∘$

Among them. $\left[\begin{matrix}δ x \\ δ y \\ δ z\end{matrix}\right]$Represents the uncertainty in the direction of the three axes of x, y, z. N N(.)epresents a normal distribution (Gaussian distribution), where the first parameter is the mean vector and the second parameter is the covariance matrix. J is the Jacobian matrix, which captures the transformation relationship from the original parameter space (such as r,θ,ϕ in the polar coordinate system) to the Cartesian coordinate system (x,y,z). µ_{rθϕ} and Σ_{rθϕ} are the mean vectors and covariance matrices in the original parameter space, respectively.

In this embodiment, it is assumed that the measurement error of the original parameters (e.g., distance r, azimuth θ, and elevation ϕ) obeys a known statistical distribution and propagates this error under the Cartesian coordinate system through the Jacobian matrix J, thus obtaining the probability distribution of the error in the x,y,z direction (i.e., uncertainty).

In some embodiments, as shown in FIG. 4, the specific implementation process of step S210 includes the following steps:
Step S410: Determine the distance uncertainty of the first data point.

Specifically, distance uncertainty is a measure of the range of error that may exist in a measurement of distance to a particular point. I n some embodiments, the laser detection module is TOF (Time of Flight) type LIDAR, so the uncertainty of the distance is mainly affected by the comprehensive influence of laser power, detection distance, laser divergence angle, ambient light interference and other factors. I n the effective range of LiDAR, it is generally believed that the power of the emitter is sufficient and the ambient light interference can be ignored, and the error is mainly affected by the detection distance and the laser divergence angle. Among them, the detection distance is the maximum distance that LiDAR can effectively detect and return data, and the detection distance is mainly determined by factors such as laser power, receiver sensitivity and target reflectivity. The laser divergence angle is the angle at which the laser beam gradually expands as it leaves the emission source, and it is usually measured in mill radians (mrad). A smaller divergence angle means that the laser beam remains narrow during propagation, while a larger divergence angle causes the laser beam to spread faster. Thus, in some embodiments, as shown in FIG. 5, the specific implementation process of step S410 includes the following steps:
Step S510: Determine the distance deviation based on the distance information of the first data point.

Step S520: Determine the divergence angle deviation based on the distance information and divergence angle information of the first data point.

Step S530: Determine the distance uncertainty of the first data point based on the distance deviation and divergence angle deviation.

Specifically, the distance uncertainty can be determined by the following equation: ${μ}_{r} = {μ}_{1} + {μ}_{2} , {σ}_{r} = {σ}_{1} + {σ}_{2} ∘$

Among them. µ₁ and σ₁ respectivelyrepresents the mean and standard deviation related to the detection distance error, that is, the distance deviation determined by the distance information of the first data point; µ₂ and σ₂ respectivelyRepresents the mean and standard deviation related to the laser divergence angle error, that is, the divergence angle deviation determined by the distance information of the first data point and the divergence angle information.

First, the detection distance r part is explained. When the detection distance is small (r < r₁ The laser echo signal is too strong to saturate the receiver, and the pulse edge cannot be accurately detected, and the time-of-flight error is dominated by signal saturation, and the distance uncertainty generated by it can be expressed asN(0, σ₁); When the detection distance is large (r > r₂ The time-of-flight error is dominated by the accuracy of the time measurement system, and the distance uncertainty it generates can be expressed asN(0, σ₂); When the detection distance is between r₁ and r₂, the laser echo signal intensity weakens, the saturation effect gradually disappears, and the photoelectric receiver gradually transitions from the saturation zone to the linear zonee^{-kr}Description, where,k > 0ₒ

In summary, the effect of detection distance on uncertainty (i.e., distance deviation) can be expressed as follows: ${μ}_{1} = 0 , {σ}_{1} = \left\{\begin{matrix}{σ}_{1} , & r \leq {r}_{1} \\ \left({σ}_{1}-{σ}_{2}\right) ⋅ {e}^{- k \left(r-{r}_{1}\right)} + {σ}_{2} , & {r}_{1} < r < {r}_{2} \\ {σ}_{2} , & r \geq {r}_{2}\end{matrix}\right. ∘$

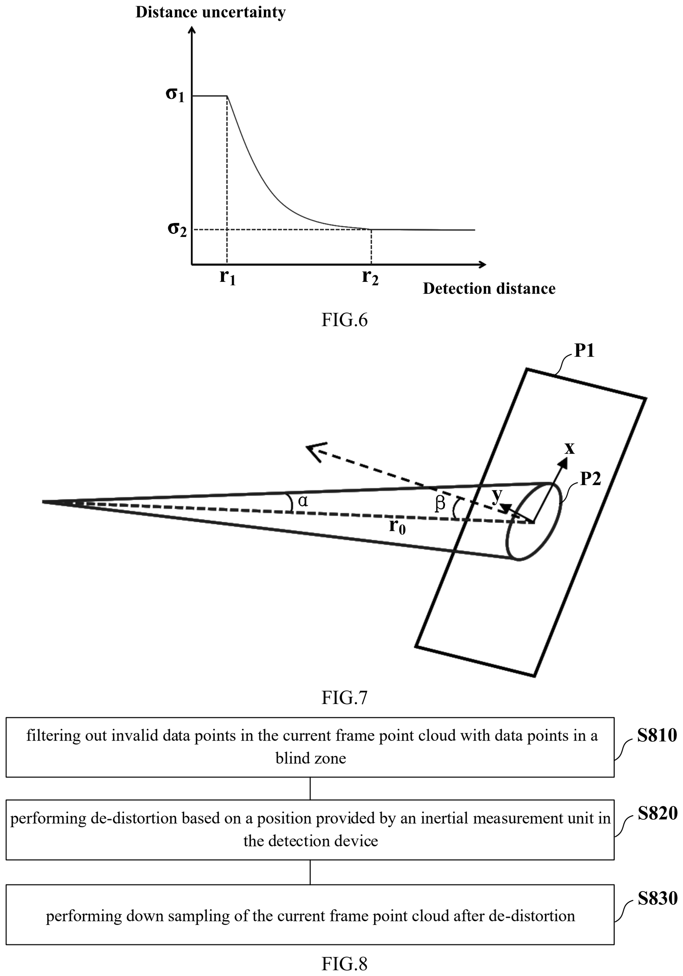

Thus, the error change curve shown in Fig. 6 is obtained, that is, the process of determining the distance deviation according to the distance information of the first data point is realised.

Next, the laser divergence angle part is explained. I deally, the laser beam is a ray, and the laser beam hitting the object intersects the surface of the object at one point, and the echo received by the receiver is relatively concentrated, which can obtain a more accurate detection distance. However, in reality, the laser beam will have a certain divergence angle α, at this time the laser beam intersects with the surface of the object to form an ellipse, and all points in this ellipse will produce echoes, which causes the echoes received by the receiver to become relatively dispersed, resulting in certain ranging errors.

Suppose a laser beam with a divergence angle of α hits a plane P1 that is not parallel to the laser beam, the angle between the plane normal vector and the laser beam ray direction is β, and the laser beam hits the plane P1 to form an elliptical spot P2, and the distance between the centre of the elliptical spot P2 and the laser emitter is r₀. The schematic diagram of the laser beam hitting the plane P1 to form an elliptical spot P2 is shown in Fig. 7, and the lengths of the long semiaxis a and the short semiaxis b of the elliptical spot P2 are: $a = \frac{{r}_{0} tan α}{cos β} , b = {r}_{0} tan α ∘$

If the 2D Cartesian coordinates are established along the elliptical length semiaxis in the centre of the elliptical spot P2, then the distance from any point (x,y) in the elliptical spot P2 to the laser emitter r_{xy} is: ${r}_{xy} = \sqrt{{\left({r}_{0}+xsin β\right)}^{2} + {y}^{2} + {\left(xcos β\right)}^{2}} \approx {r}_{0} + xsin β + \frac{{y}^{2} + {x}^{2} {cos}^{2} β}{2 d} ∘$

The laser ranging result can be regarded as the average of the distance from all points to the laser emitter in the elliptical spot P2, and the ranging error caused by the laser divergence angle is the average error of the distance r_{xy} and r₀ from all points in the elliptical spot P2, and the average error error (r₀) is: $\begin{matrix}error \left({r}_{0}\right) = \frac{{∬}_{Light spot} \left({r}_{xy}-{r}_{0}\right) dxdy}{{∬}_{Light spot} dxdy} \\ \approx \frac{sin α}{π ab} ∬ x dxdy + \frac{1}{2 d π ab} ∬ \left({y}^{2}+{x}^{2}{cos}^{2}β\right) dxdy ∘ \\ = \frac{{r}_{0} {tan}^{2} α}{4}\end{matrix}$

Therefore, the effect of laser divergence angle on distance uncertainty (i.e., divergence angle deviation) can be expressed as: ${μ}_{2} = 0 , {σ}_{2} = \frac{{rtan}^{2} α}{4} ∘$

Thus, the process of determining the divergence angle deviation is realised according to the distance information and divergence angle information of the first data point.

According to the above process µ₁, µ₂ , σ₁ and σ₂, can be determined µᵣ and σᵣ, i.e., determine the distance uncertainty of the first data point.

Step S420: Determine the angular uncertainty of the first data point.

In some embodiments, the source of error of the polar angle θ and azimuth angle ϕ is mainly the angle measurement error, which has nothing to do with the measurement object, and can be empirically set up σ_{θ} and σ_{ϕ} Set to the same fixed value. At the same time, the configuration µ_{θ} = µ_{ϕ}=0, thus determining the angular uncertainty of the first data point.

Step S430: Determine the uncertainty of the first data point based on the distance and angular uncertainty of the first data point.

Through the above process, the distance uncertainty and angle uncertainty are determined, and then the uncertainty of the first data point is determined by combining the distance uncertainty and the angular uncertainty, and the data points in the current frame point cloud are configured as the first data point in turn, which can determine the uncertainty of each data point in the current frame point cloud.

In some embodiments, as shown in FIG. 8, before executing step S210, the positioning method also includes the following steps:
Step S810: Filter out invalid data points in the current frame point cloud and data points in the dead zone.

The first data point is the data point included after the current frame point cloud filters out the invalid data points and the data points in the dead zone. I nvalid data points include those anomalies such as NaN points that occur due to sensor noise, measurement errors, or environmental interference. B lind zones are areas where the sensor cannot measure effectively, often due to the sensor's minimum measurement distance limitation or occlusion. P oints within the dead zone are usually noise points or invalid points that need to be eliminated. Filtering out invalid data points and data points in the dead zone can effectively reduce noise and redundant information, and improve the performance of subsequent tasks.

Step S820: Perform dedistortion based on the pose provided by the inertial measurement unit in the probing device.

In dynamic environments (e.g., mobile robots, autonomous vehicles), detection equipment may move during data collection, leading to distortion of point cloud data. By combining the pose information of the inertial measurement unit, the point cloud can be dedistorted, thereby improving the quality of the point cloud and the accuracy of subsequent tasks.

In a specific embodiment, the implementation process of step S820 is as follows: the pose of the detection device corresponding to the moment of each data obtained by interpolation is relative to the pose of the detection device corresponding to the moment at the frame head (or frame end) of the current frame point cloud, and the coordinates of all data points are unified to the coordinates of the laser detection module at the time of the frame head (or frame end) through coordinate transformation, so as to generate a new current frame point cloud, and the new current frame point cloud is the current frame point cloud after dedistortion. T he goal of interpolation is to construct a function based on known data points, so that the function passes through these known points and can be used to estimate values at other locations. Common interpolation methods include linear interpolation, polynomial interpolation, spline interpolation, etc.

In some embodiments, the inertial measurement unit provides the specific implementation process of the pose as follows: the inertial measurement unit provides information about the motion of the detection device, including linear acceleration and angular velocity, through its internal accelerometer and gyroscope sensor. The above signals are then integrated, and the pose (position and attitude) of the detection device can be calculated. It is understood that the pose provided by the inertial measurement unit here is a priori pose, and the prior pose is the preliminary information about the position and attitude of the detection device based on previous knowledge or estimation when performing positioning or tracking tasks.

In some embodiments, the specific implementation process of providing pose by the inertial measurement unit is as follows: align the inertial measurement unit to the one with the higher frame rate in the camera module and the laser detection module, and pre-integrate the information generated by the inertial measurement unit about the movement of the detection device, which can calculate the pose (position and attitude) of the detection device. Among them, by aligning the inertial measurement unit to the higher frame rate of the camera module and laser detection module, the high-frequency characteristics of the inertial measurement unit can be used to compensate for the shortcomings of the low-frequency sensor.

Step S830: Downsample the current dedistorted point cloud.

Specifically, by downsampling, the scale of point cloud data can be reduced, thereby reducing the computational complexity of subsequent processing while retaining key geometric information.

In a specific embodiment, voxel filtering and random point selection are used to downsample the current frame point cloud after distortion to reduce computing power consumption. V oxel filtering is used to divide the point cloud into regular three-dimensional meshes (voxels) and then replace all points within that voxel with a representative point within each voxel, usually the centroid. R andom point selection is used to randomly select a certain percentage of points from the point cloud as the downsampled point cloud. Of course, other methods of downsampling can also be used in other implementations, such as setting a minimum point spacing and removing points that are too close to each other to ensure more uniform sampling with a more uniform point cloud distribution.

Step S220: According to the first data point in the current frame point cloud and the N second data points closest to the first data point in the point cloud map, determine the fitting plane corresponding to the first data point, wherein the point cloud map is obtained based on the accumulation of historical frame point clouds collected by the detection device, the second data point is any data point in the point cloud map, and N is an integer greater than or equal to three.

Specifically, this step is used to find the associated plane in the point cloud map for each data point in the current frame point cloud to form a constraint between the data point and its associated plane, the point-surface constraint. A mong them, the associated plane found in the point cloud map for each data point is the fitting plane corresponding to each data point, and the fitting plane is determined by N second data points. It is understood that the N second data points closest to the first data point refer to the N second data points whose distance increases from the smallest to the smallest based on distance ordering, rather than the N second data points with the same distance and are all the smallest.

In some embodiments, after performing step S220, the localisation method also includes the following steps: according to the preset parameters, filter out the fitting planes that do not meet the preset indicators from the set of each fitting plane to obtain the remaining fitting planes.

In a specific embodiment, the preset parameters include plane eigenvalues and point-to-surface distances. F or the eigenvalue of the plane: principal component analysis (PCA) can be used to extract the eigenvalue of the covariance matrix of each fitting plane, and obtain the minimum eigenvalue, if the minimum eigenvalue is greater than the set threshold (i.e., the preset index), the region is considered to be not a plane, that is, the fitting plane does not meet the preset index, and it is filtered out. A mong them, principal component analysis is a dimensionality reduction technique, which finds the main distribution direction of the data by calculating the covariance matrix of the data and extracting its eigenvalues and eigenvectors. For point-to-face distance: If the maximum value of point-to-surface distance exceeds the set threshold (i.e., the preset index), the quality of the plane is considered to be low, that is, the fitting plane does not meet the preset index, and it is filtered out.

Step S230: Determine the uncertainty of the fitting plane corresponding to the first data point based on the uncertainty of N second data points.

Among them, the uncertainty of N second data points is directly obtained from the point cloud map. According to the uncertainty of N second data points, the uncertainty of the fitting plane obtained based on N second data points can be determined, and the uncertainty of the fitting plane is also the uncertainty of the fitting plane corresponding to the first data point.

Step S240: Correct the pose of the probe device based on the uncertainty of at least part of the first data point and the corresponding fitting plane.

In some embodiments, the pose of the detection device can be corrected according to the uncertainty of all the first data points in the current frame point cloud and the uncertainty of the fitting plane corresponding to each first data point.

In some embodiments, the pose of the detection device can be corrected according to the uncertainty of the first data point corresponding to the remaining fitting plane obtained after filtering out the fitting plane that does not meet the preset index in the set of each fitting plane and the uncertainty of the corresponding fitting plane. A ssuming that the current frame point cloud includes L1 first data point, the L1 fitting plane corresponding to the L1 first data point can be determined, and according to the preset parameters, the L2 fitting plane that does not meet the preset index is filtered out in the L1 fitting plane to obtain the remaining L1-L2 fitting plane, in which L1 and L2 are integers greater than 0, and L2 is less than L1. The pose of the detection device is corrected according to the uncertainty of the first data points of L1-L2 corresponding to the remaining L1-L2 fitting planes and the uncertainty of L1-L2 fitting planes.

This embodiment retains only the high-quality fitting plane that meets the requirements to correct the position of the detection equipment, which not only improves the accuracy of the correction, but also simplifies the data and reduces the complexity of the subsequent processing.

In some embodiments, before performing step S240, the positioning method also includes the following steps: determine whether the current frame point cloud has degraded; I f the current frame point cloud degrades, the pose of the detection device will not be corrected. If the current frame point cloud does not degrade, the step of correcting the pose of the detection device according to the uncertainty of at least part of the first data point and the corresponding fitting plane is entered, that is, step S240.

It is understood that in point cloud matching, especially when using the "point-to-face" distance minimisation alignment method, the data points in the point cloud provide constraints in the same direction as their normal vectors. The accuracy of the correction of the position of the probe is then positively related to the distribution of normal vectors. When the distribution of normal vectors in the direction of any degree of freedom is small, it is determined that the point cloud features are degraded, i.e., the point cloud is degraded.

In some embodiments, principal component analysis can be used to determine whether the point cloud of the current frame has degraded, and the principal component direction represents the main direction of the change of the normal vector, and the eigenvalue of the principal component direction represents the change amplitude of the normal vector in this direction. T he specific steps are as follows: First, the principal component analysis is carried out on the normal vector point cloud, and the covariance matrix is calculated, in which the normal vector point cloud is the set of normal vectors corresponding to the fitting plane of each point in the point cloud. T hen, the eigenvalues and eigenvectors of the covariance matrix are solved, and the eigenvector corresponding to the smallest eigenvalue is the degradation direction. L et the point cloud composed of the normal vector be X, n is the number of points in the normal vector point cloud, µ is the point cloud centroid, Xc is the centralised point cloud, U is the eigenvector matrix, and Λ is the eigenvalue matrix. The covariance matrix and decomposition result are obtained by the following formula: $μ = \frac{1}{n} {\sum }_{i = 1}^{n} {x}_{i} , {X}_{c} = X - μ , \sum = \frac{1}{n} {X}_{c} {X}_{c}^{T} = U ∧ {V}^{T} ∘$

When the minimum eigenvalue (the minimum diagonal element of Λ) is less than the preset threshold, it means that the point cloud feature has degraded, that is, the point cloud has degraded, and the pose of the detection device is not corrected. When the minimum eigenvalue is greater than or equal to the threshold, proceed to step S240.

In some embodiments, the specific implementation process of step S240 includes the following steps: Configure the point surface constraint observation equation as: $\left[\begin{matrix}0 \\ 0 \\ ⋮ \\ 0\end{matrix}\right] = \left[\begin{matrix}{e}_{1}^{T} {w}_{1}^{2} {e}_{1} \\ {e}_{2}^{T} {w}_{2}^{2} {e}_{2} \\ ⋮ \\ {e}_{M}^{T} {w}_{M}^{2} {e}_{M}\end{matrix}\right]$ of which. ${e}_{M}^{T}$ as e_{M} transposition of the e_{M} is the point surface error of the first matching pair of M, the first matching pair is the matching pair composed of the first data point and the corresponding fitting plane, and M is an integer greater than zero, W_{M} is the constraint weight of the first matching pair of M; According to the uncertainty of each first data point, the uncertainty of the corresponding fitting plane and the point surface constraint observation equation, the pose of the detection equipment is corrected.

Specifically, it is known that the external reference of the laser detection module to the inertial measurement unit in the detection device is ${T}_{l}^{i}$, the external parameter is a set of parameters that describe the relative position and direction relationship between the two sensors. S uppose the current frame point cloud has M first matching pairs. For the jth first matching pair in M first matching pairs, there are the following parameters: The laser detection module system coordinates of the first data point are known ${P}_{j}^{l} = {\left[{x}_{j}^{l}, {y}_{j}^{l}, {z}_{j}^{l}\right]}^{T}$, the uncertainty of the first data point is ${Σ}_{j}^{l}$, the fitting plane corresponding to the first data point is ${\left[{n}_{j}^{w}, {O}_{j}^{w}\right]}^{T}$, where the former of the fitting plane is the normal vector of the plane in the world system and the latter are the coordinates of the centre point of the plane in the world system, and the uncertainty of the fitting plane is Σₙₒⱼ, the position of the detection equipment is ${T}_{i}^{w}$, based on the parameters of the jth first matching pair, the following calculation formula can be obtained: $\begin{matrix}{J}^{j} = {\left[\begin{matrix}{T}_{i}^{w} {T}_{l}^{i} {{P}_{j}}^{l} - {O}_{j}^{w} \\ - {n}_{j}^{w}\end{matrix}\right]}^{T} , { S}_{j}^{w} = {R}_{i}^{w} {R}_{l}^{i} {Σ}_{j}^{l} {\left({R}_{i}^{w}{R}_{l}^{i}\right)}^{T} , {w}_{j} = \frac{1}{{n}_{j}^{{w}^{T}} {Σ}_{j}^{w} {n}_{j}^{w} + {J}_{j} {Σ}_{noj} {J}_{j}^{T}} , {e}_{j} = \\ {n}_{j}^{{w}^{T}} \left({T}_{i}^{w}{T}_{l}^{i}{P}_{j}^{l}-{O}_{j}^{w}\right) ∘\end{matrix}$

### Combining

eⱼ Substituting into the point-surface constrained observation equations, and adjusting ${e}_{M}^{T} {w}_{M}^{2} {e}_{M}$, so that it is close to or equal to 0, in order to achieve the correction of the position of the detection device. Where, by eⱼ It can be obtained that the point surface error is a function of the position, and by adjusting eⱼ The parameter in , which minimises the error obtained from the calculation. By the fact that wⱼ It can be seen that the constraint weights are calculated by weighting the errors, in which some errors correspond to high quality constraints, the constraint weights are large, in order to make it adjusted to close to 0, the optimised pose error will be smaller; some errors correspond to low quality constraints, the constraint weights are small, also in order to make it adjusted to close to 0, the optimised pose error may be a little larger than the former.

In summary, the modelling of errors in the point cloud and the correction of the position of the detection device can be used to better quantify and correct these errors in the positioning process, which is conducive to improving the positioning accuracy.

In some implementations, after determining the point-plane error and constraint weights for each first matching pair, the position of the detection device may be corrected asynchronously or synchronously based on error state Kalman filtering, error state iterative Kalman filtering, or using a nonlinear optimisation scheme based on a factor graph.

In some embodiments, after executing step S240, the positioning method also includes the following steps: inserting the current frame point cloud into the point cloud map to obtain the updated point cloud map.

Specifically, by converting the current frame point cloud to world coordinates and then inserting the point cloud map, the newly collected point cloud data can be fused with the existing point cloud map to construct a complete and consistent environment representation; the current point cloud frame is fused with the existing point cloud map to obtain the updated point cloud map, and the next frame point cloud will be further fused with the updated point cloud map, and so on.

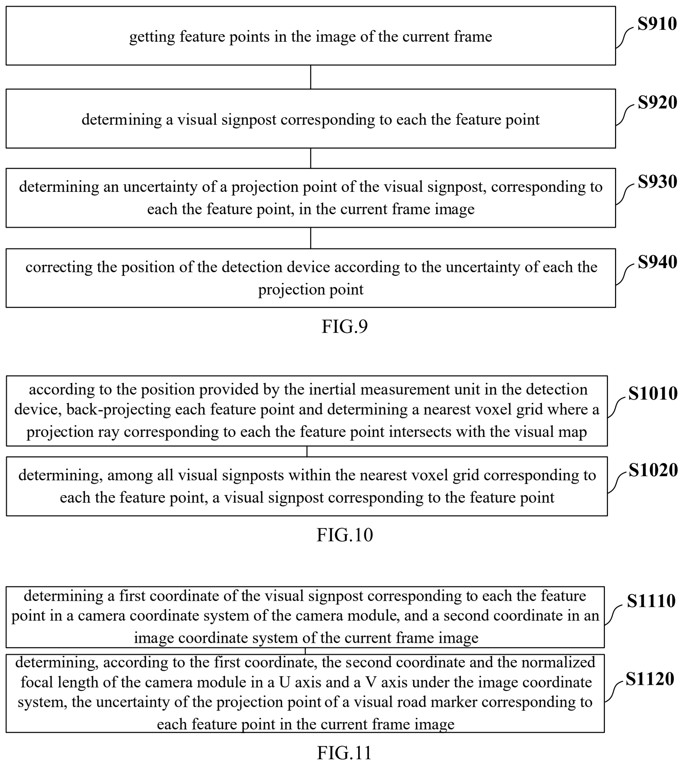

In some embodiments, the detection device includes a camera module, and the camera module is used to acquire images. Then, as shown in FIG. 9, the localisation method further comprises the steps of:
Step S910: Acquire feature points in the current frame image.

Among them, feature points refer to points in an image that have distinctiveness, stability, and uniqueness, such as corner points, edge points, or areas with rich textures.

In some embodiments, the specific implementation process of step S910 is as follows: based on LK (Lucas-Kanade) optical flow, the feature points of the previous frame image are tracked, and the corners are additionally extracted in the sparse area of the feature points, and the feature points obtained by the optical flow tracking are merged with the additional extracted corners to form the feature points of the current frame image. The principle of LK optical flow method is to estimate the motion of feature points between consecutive frames by assuming that the pixel intensity in the local area remains unchanged. I f the feature points are unevenly distributed after optical flow tracking (for example, there are too few feature points in some areas), additional corners can be extracted in these sparse regions to supplement the feature density. Commonly used corner detection algorithms include Harris corner detection, Shi-Tomasi corner detection, or FAST detection.

Step S920: Determine the visual signpost corresponding to each feature point.

Among them, visual road signs are data points based on the historical frame point point cloud projected to the historical frame image when the angular response value is higher than the preset threshold, and the visual road sign carries the coordinate information and visual information under the world coordinate system. A visual landmark includes a feature point or area in the environment that is distinctive, stable, and repeatable, such as corners, edges, or textured areas.

Determination of the visual signposts corresponding to each feature point is used to correlate the feature points in the current frame image with the actual physical signposts in the environment in order to construct the environment map.

In some embodiments, as shown in FIG. 10, the specific implementation process of step S920 includes the following steps:
Step S1010: Backprojection of each feature point according to the pose provided by the inertial measurement unit in the detection device, and determine the nearest voxel grid at which the projected rays corresponding to each feature point intersect the visual map.

Step S1020: Determine the visual signpost corresponding to the feature point among all the visual signposts in the nearest voxel mesh corresponding to each feature point.

Among them, the visual map is a three-dimensional map obtained based on multi-frame images collected by the camera module. It should be noted here that visual maps are different from 3D point cloud maps formed by multi-frame point cloud data. V isual maps usually do not directly store the complete 3D geometric information of the environment, nor do they store complete visual image information, but only store visual positioning-related information, such as visual road signs. B ackprojection is used to convert 2D feature points in the image plane into 3D ray directions through the internal and external parameters of the camera module. V oxel grid is a data representation in three-dimensional space, dividing three-dimensional space into uniform small cube cells, and each cell (voxel) records information about that location (such as colour, density, occupancy status, etc.). S tarting from the centre of the camera module, find the first voxel position where the voxel intersects with the voxel mesh along the backprojection direction of each feature point (i.e., the projection ray corresponding to each feature point), which is the closest intersection point between the projection ray and the voxel mesh. The voxel at which the nearest intersection is located is the nearest voxel mesh.

In some embodiments, after determining the nearest voxel mesh corresponding to each feature point, all the visual signposts in the nearest voxel mesh corresponding to each feature point are traversed, and then the visual signpost with the highest descriptor similarity or normalised cross-correlation (NCC) value is selected from all the visual signposts corresponding to each feature point as the visual signpost corresponding to each feature point. A mong them, descriptor similarity is a measure of the degree of similarity between two feature descriptors, commonly used such as Euclidean distance and Hamming distance. F or binary descriptors (such as ORBs), the Hamming distance is usually used; F or floating-point descriptors such as SIFT, Euclidean distance may be used. The NCC value is a measure used to compare the similarity between two image blocks.

In this embodiment, the possibility of incorrect correspondence of feature points to visual road signs can be significantly reduced by limiting the search within the nearest voxel grid, because only those visual road signs located within a reasonable distance are likely to be correct correspondents of each feature point, and the corresponding speed can also be accelerated. Secondly, combined with geometric constraints (projected rays intersect voxel meshes) and descriptor similarity, problems such as lighting changes and perspective changes can be handled more robustly in complex environments.

Step S930: Determine the uncertainty of the projection point in the current frame image of the visual signpost corresponding to each feature point.

In embodiments of the present application, the detection device comprises a laser detection module and a camera module so that a point cloud can be used to provide visual signposting information for vision. When projecting the point cloud onto an image to obtain visual constraints, measurement errors in the point cloud are transferred to the projection point, resulting in an error in the projection point, which is the uncertainty of the projection point.

In some embodiments, as shown in Figure 11, the specific implementation process of step S930 includes the following steps:
Step S1110: Determine the first coordinate of the visual signpost corresponding to each feature point in the camera coordinate system of the camera module and the second coordinate under the image coordinate system of the current frame image.

The first coordinate is a three-dimensional coordinate and the second coordinate is a two-dimensional coordinate.

Step S1120: Determine the uncertainty of the visual signpost corresponding to each feature point and the projection point in the current frame image according to the normalised focal length of the first coordinate, the second coordinate and the camera module in the U axis and V axis under the image coordinate system.

Specifically, let the coordinates of the point cloud in the camera coordinate system be(x_{c}, y_{c}, z_{c}), whose error obeysN( µ_{xyz}, Σ_{xyz}), the coordinates of the projected point under the image coordinate system are(u, v) The normalised focal lengths of the U axis and V axis of the camera module under the image coordinate system are FX and FY, respectively, taking into account z_{c} » σ_{z} i.e., depth z_{c} The standard deviation of σ_{z} As opposed to z_{c} are very small and can therefore be ignored z_{c} of randomness on the projection. The uncertainty of the projection point can be described as follows: $\left[\begin{matrix}{δ}_{u} \\ {δ}_{v}\end{matrix}\right] ∼ N \left({Aμ}_{xy},{AΣ}_{xy}{A}^{T}\right) , A = \left[\begin{matrix}{f}_{x} / {z}_{c} & 0 \\ 0 & {f}_{y} / {z}_{c}\end{matrix}\right] ∘$

Among them.A µ_{xy} is the mean value of the projection point error.A Σ_{xy} A^{T} is the covariance matrix of the projection point errors.

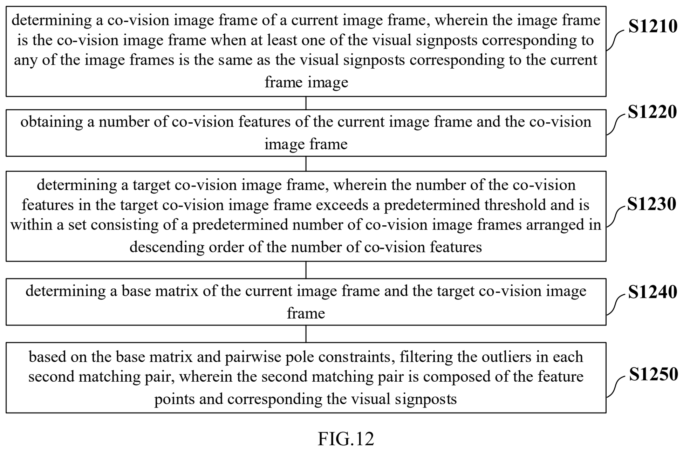

In some embodiments, due to the low discrimination of the scene, the difference in viewing angle, the large initial pose error, etc., there may be some miscorrespondence between the corresponding feature points and the visual road signs, in order to avoid the miscorrespondence affecting the subsequent correction of the pose of the detection equipment, the method shown in Fig. 12 can be used to screen and filter the miscorrespondence feature points and visual road signs. As shown in Figure 12, the positioning method also includes the following steps before performing step S930:
Step S1210: Determine the co-vision image frame of the current image frame, wherein the image frame is a co-vision image frame when the visual signpost corresponding to any image frame is at least identical to the visual signpost corresponding to the current frame image.

The visual signposts corresponding to any image frame refer to the visual signposts corresponding to all feature points in that image frame. The visual signposts corresponding to the current image frame refer to the visual signposts corresponding to all feature points in the current image frame.

Step S1220: Obtain the number of coincidental features of the current image frame and the co-vision image frame.

The number of co-vision features refers to the number of visual signposts corresponding to the current image frame that are the same as the visual signposts corresponding to the covision image frames. F or example, in one embodiment, the visual signpost corresponding to the current image frame includes visual signpost B1, visual signpost B2 and visual signpost B3; The visual signpost corresponding to the co-vision image frame includes visual signpost B1 and visual signpost B4, then the visual signpost corresponding to the current image frame is the same visual signpost as the visual signpost corresponding to the co-vision image frame is visual signpost B1, and the number of co-op features of the current image frame and the co-vision image frame is 1.

Step S1230: Determine the target covision image frame, where the number of covid features in the target covid image frame exceeds the preset threshold and belongs to the set of covid image frames arranged according to the number of covid features from largest to smallest.

The preset threshold and preset quantity can be set according to the actual application scenario, and the embodiment of the present application does not impose specific restrictions on this. T aking the co-vision image frame of the current image frame as the co-vision image frame C1, the co-vision image frame C2, the co-vision image frame C3 and the co-vision image frame C4, and the preset threshold and the preset number are 2 as an example, the number of co-op features of the co-vision image frame C1 and the current image frame is 1, the number of co-op features of the co-vision image frame C2 and the current image frame is 3, the number of co-op features of the co-vision image frame C3 and the current image frame is 5, and the number of co-op features of the co-vision image frame C4 and the current image frame is 7, then the co-vision image frame C2, If the co-vision image frame C3 and co-vision image frame C4 exceed the preset threshold, but the preset number is 2, the target co-vision image frame belongs to the set composed of co-vision image frame C3 and co-vision image frame C4.

Step S1240: Determine the basic matrix of the current image frame and the target co-view image frame.

The base matrix is used to describe the geometric relationship between two images. I n some embodiments, the basic matrix of the current image frame and the target co-view image frame can be calculated based on the Random Sample Consensus (RANSAC) method. Among them, the RANSAC method is a robust estimation method used to fit models from data containing noise and outliers, with the core idea of gradually approximating the optimal solution through random sampling and internal point screening.

Step S1250: Based on the basic matrix and antipolar constraints, the outliers in each second matching pair are filtered, wherein the second matching pair is composed of feature points and corresponding visual signs.

Specifically, if two image frames (in this embodiment, the current image frame and the target co-vision image frame, respectively) simultaneously correspond to points of the visual waypoints that are the same positional space points, the pair of poles constraint must be satisfied as follows: ${P}_{2}^{T} {FP}_{1} = 0$, where F is the base matrix. P₁ and P₂ are the normalised chisquare coordinates in the two images, respectively. Thus, the visual signposts that satisfy the antipodal constraints are normal values, and the visual signposts that do not satisfy the antipodal constraints are abnormal values. Filtering the visual roadmap and its corresponding feature points that do not satisfy the antipodal constraints can effectively eliminate the erroneous second matching pairs and improve the quality of the second matching pairs, so as to ensure that the subsequent position correction of the detection equipment has high accuracy and robustness.

It is understandable that after filtering the outliers in each second matching pair, when performing step S930, only the visual signposts in the remaining second matching pairs after filtering the outliers in each second matching pair are determined, and the uncertainty of the projection points in the current frame image not only simplifies the data, but also improves the subsequent positioning accuracy.

Step S940: Correct the pose of the detection device according to the uncertainty of each projection point.

Understandably, due to the scene texture, lighting, etc., there may be fewer or more concentrated visual constraints, resulting in the generation of constraints that are degraded in some degrees of freedom, which, if left unchecked, may lead to large errors in the results of the correction of the position of the detection device, a phenomenon referred to as degradation of the image.

Based on the above reasons, the embodiment of the present application provides a scheme for detecting image degradation. S pecifically, in some embodiments, before performing step S940, the positioning method also includes the following steps: determine whether the current frame image has degraded; I f the current frame image is degraded, the pose of the detection device will not be corrected. If the current frame image is not degraded, proceed to step S940.

In a specific embodiment, firstly, if the current frame image contains D feature points, and a target area is determined according to each feature point, D target regions can be determined according to D feature points. A mong them, the target area is the area determined by the feature point, that is, the target area includes the feature point and its neighbourhood. F or example, in some embodiments, the target area is a circular area centred on the feature point and the radius is a preset pixel size; F or example, in some embodiments, the target area is centred on the feature point, and the width and height are the rectangular area of the first preset pixel size and the second preset pixel size, respectively. T hen, the ratio of the total number of pixels in the D target area to the total number of pixels in the current frame image is calculated. I f the ratio is less than or equal to the preset threshold, it is determined that the constraint produced at this time is insufficient, so that the current frame image degrades and the pose of the detection device is not corrected. If the ratio is greater than the preset threshold, it is determined that the constraint generated at this time is sufficient, so that the current frame image is not degraded, and step S940 is taken.

In some embodiments, the specific implementation process of step S940 includes the following steps: Configure the visual reprojection constraint observation equation as: $\left[\begin{matrix}0 \\ 0 \\ ⋮ \\ 0\end{matrix}\right] =$ $\left[\begin{matrix}{e}_{1}^{T} {W}_{1}^{T} {W}_{1} {e}_{1} \\ {e}_{2}^{T} {W}_{2}^{T} {W}_{2} {e}_{2} \\ ⋮ \\ {e}_{A}^{T} {W}_{A}^{T} {W}_{A} {e}_{A}\end{matrix}\right]$ of which. ${e}_{A}^{T}$ as e_{A} transposition of the e_{A} is the reprojection error of the second matching pair of A, and the second matching pair is the matching pair composed of the feature point and the corresponding visual sign, W_{A} is the constraint weight of the second matching pair A, ${W}_{A}^{T}$ as W_{A} The position of the detection device is corrected according to the uncertainty of each projection point and the visual reprojection constraint observation equations.

Specifically, the embodiment is exemplified by a reprojection error. It is known that the external parameter from the camera module to the inertial measurement unit is ${T}_{c}^{i} ∘$ uppose the current frame image has A second matching pair. For the qth second match pair in A second match pair, the pixel coordinates of the feature point are known p_{q} = [u_{q}, v_{q}]^{T}, the visual signposts have coordinates under the world system ${P}_{q}^{w} = {\left[{x}_{q}^{w}, {y}_{q}^{w}, {z}_{q}^{w}\right]}^{T}$, which has a projected point uncertainty of Σ_{q}, the position of the detection equipment is ${T}_{i}^{w}$, then based on the parameters of the second matching pair of q, the following formula can be obtained: ${W}_{q}^{T} = sqrt \left({Σ}_{q}^{- 1}\right) , {e}_{q} = \left({p}_{q}-π\left({\left({T}_{c}^{i}\right)}^{- 1}{\left({T}_{i}^{w}\right)}^{- 1}{P}_{q}^{w}\right)\right) ∘$

Among them. W_{q} is the constraint weight of the second matching pair of q,e_{q} is the reprojection error of the second matching pair of q. will W_{q} and e_{q} Substituting into the visual reprojection constrained observation equations, and adjusting ${e}_{A}^{T} {W}_{A}^{T} {W}_{A} {e}_{A}$ The correction optimisation process is similar to that of the current frame point cloud, and will not be repeated here. The correction optimisation process is similar to the above process of using the current frame point cloud to correct and optimise the position of the detection device, so we will not repeat it here.

In some implementations, after determining the reprojection error and constraint weights for each second matching pair, the position of the detection device may be corrected asynchronously or synchronously based on error state Kalman filtering, error state iterative Kalman filtering, or using a non-linear optimisation scheme based on a factor graph.

In summary, in the embodiment of the present application, in the first aspect, the pose of the detection device is corrected according to the uncertainty of at least part of the first data point and the corresponding fitting plane. S pecifically, the embodiment of the present application models the error of the data points in the point cloud, so that the errors of different data points can be distinguished, that is, the error estimation of the data points can be more accurate, and the pose of the detection device is corrected based on this, which is conducive to improving the accuracy of positioning. I n the second aspect, the method provided by the embodiment of the present application sequentially filters out invalid data points and data points in the blind zone, de-distortion and downsampling of the current frame point cloud, which can reduce the computational complexity of subsequent processing and improve the quality of the point cloud at the same time, which is conducive to improving the positioning accuracy. T hirdly, the method provided by the embodiment of the present application filters out the fitting plane that does not meet the preset indicators, and only retains the high-quality fitting plane that meets the requirements to correct the pose of the detection device, which not only improves the accuracy of the correction, but also simplifies the data, which is conducive to reducing the complexity of subsequent processing. F ourthly, the method provided by the embodiment of the present application corrects the pose of the detection equipment only when the point cloud or image has not degraded, so as to avoid the drift of the correction result in the direction of degradation and improve the stability and accuracy of positioning. F ifthly, the method provided by the embodiment of the present application corrects the pose of the detection device according to the uncertainty of each projection point, which can provide reasonable weight for the visual constraints, so that the stability of the visual correction is better and less susceptible to noise. S ixth, the method provided by the embodiment of the present application can effectively eliminate the wrong second matching pair and improve the quality of the second matching pair, so as to ensure that the subsequent pose correction of the detection device has high accuracy and robustness. S eventh, the method provided by the embodiment of the present application calculates reasonable uncertainties (including uncertainties related to point clouds and images), and only one set of hyperparameters can be used to meet the requirements in different scenarios, without the need for parameter adjustment for different scenarios, which significantly improves the ease of use of the positioning algorithm. Eighth, the method provided by the embodiment of the present application combines a laser detection module, a camera module and an inertial measurement unit to realise the positioning mapping scheme, makes full use of the inputs of various sensors, and conducts reasonable modelling calculations on the confidence (i.e., uncertainty) of various observations, and cooperates with degradation detection, which can achieve high robustness, high ease of use, and high precision positioning and mapping effects.

The above is only an example of this application, and is not intended to limit the patent scope of this application. Any equivalent structure or equivalent process transformation using the contents of the specification of this application and the accompanying drawings, or directly or indirectly applied in other related fields of technology, are similarly included in the scope of patent protection of this application.

The above embodiments are only used to illustrate the technical solutions of the present application, not to limit them; under the idea of the present application, the above embodiments or the technical features in different embodiments can be combined, and the steps can be realised in any order. The person of ordinary skill in the field should understand: it can still modify the technical solutions recorded in the preceding embodiments, or replace some of the technical features with equivalent ones; and these modifications or replacements do not make the essence of the corresponding technical solutions out of the scope of the technical solutions of the embodiments of this application.

## Claims

1. A method of positioning, applied to a detection device, wherein the detection device comprising a laser detection module, the laser detection module being used to acquire point cloud data, the method comprising:
determining an uncertainty of a first data point in a current frame point cloud, wherein the first data point is any data point in the current frame point cloud;
determining, according to the first data point in the current frame point cloud and N second data points closest to the first data point in a point cloud map, a fitting plane corresponding to the first data point, wherein the point cloud map is obtained based on an accumulation of historical frame point clouds collected by the detection device, the second data point is any data point in the point cloud map, and N is an integer greater than or equal to three;
determining, based on a uncertainty of the N second data points, the uncertainty of the fitting plane corresponding to the first data point; and
correcting a position of the detection device based on the uncertainty of at least some of the first data points and corresponding fitting planes.

2. The method according to claim 1, wherein the determining an uncertainty of the first data point in the current frame point cloud comprising:
determining a distance uncertainty for the first data point;
determining an angular uncertainty of the first data point; and
determining an uncertainty of the first data point based on the distance uncertainty and the angular uncertainty of the first data point.

3. The method according to claim 2, wherein the determining a distance uncertainty of the first data point, comprising:
determining a distance deviation based on a distance information of the first data point;
determining a divergence angle deviation based on the distance information of the first data point and a divergence angle information;
determining the distance uncertainty for the first data point based on the distance deviation and divergence angle deviation.

4. The method according to claim 1, wherein after determining the fitting plane corresponding to the data point according to the first data point in the current frame point cloud and N second data points closest to the data point in the point cloud map, the method further comprises:
filtering out the fitting planes that do not satisfy preset indexes from the set of the fitting planes according to preset parameters, in order to obtain the remaining fitting planes;
wherein the correcting the position of the detection device based on the uncertainty of at least some of the first data point and the corresponding fitting planes, comprising:
correcting the position of the detection device based on the uncertainty of the first data point corresponding to the remaining fitting plane and the uncertainty of the corresponding fitting plane.

5. The method according to claim 1, wherein before the correcting the position of the detection device based on the uncertainty of at least some of the first data points and of the corresponding fitting planes, the method further comprises:
determining whether the current frame point cloud is degraded;
if the current frame point cloud is degraded, not correcting the position of the detection device;
if the current frame point cloud is not degraded, proceeding to the step of correcting the position of the detection device based on the uncertainty of at least some of the first data point and the corresponding fitting planes.

6. The method according to claim 1, wherein the correcting the position of the detection device based on the uncertainty of at least some of the first data points and corresponding fitting planes, comprising:
configuring the point-surface constrained observation equations as: $\left[\begin{matrix}0 \\ 0 \\ ⋮ \\ 0\end{matrix}\right] = \left[\begin{matrix}{e}_{1}^{T} {w}_{1}^{2} {e}_{1} \\ {e}_{2}^{T} {w}_{2}^{2} {e}_{2} \\ ⋮ \\ {e}_{M}^{T} {w}_{M}^{2} {e}_{M}\end{matrix}\right]$,
wherein ${e}_{M}^{T}$ is a transposition of e_{M} ,e_{M} is a point-plane error of a first matching pair of M, the first matching pair is a matching pair composed of the first data point and the corresponding fitting plane, and M is an integer greater than zero, W_{M} is a constraint weight of the first matching pair of M;
correcting the position of the detection device based on the uncertainty of each the first data point, the uncertainty of the corresponding fitting plane and the point-plane constrained observation equation.

7. The method according to claim 1, wherein prior to the step of determining the uncertainty of the first data point in the current frame point cloud, the method further comprises:
filtering out invalid data points in the current frame point cloud with data points in a blind zone;
performing de-distortion based on a position provided by an inertial measurement unit in the detection device;
performing down sampling of the current frame point cloud after de-distortion;
wherein the first data point is a data point included in the current frame point cloud after filtering out the invalid data points and data points in the blind zone.

8. The method according to claim 1, wherein after the step of correcting the position of the detection device according to the uncertainty of at least part of the first data point and the corresponding fitting planes, the method further comprises:
inserting the current frame point cloud into the point cloud map to obtain an updated point cloud map.

9. The method according to claim 1, wherein the detection device comprises a camera module, the camera module being configured to acquire an image, the method further comprising:
getting feature points in the image of the current frame;
determining a visual signpost corresponding to each the feature point, wherein the visual signpost is a data point whose corner point response value is higher than a preset threshold value based on a projection of a point cloud of historical frames to an image of the historical frames, and wherein the visual signpost carries coordinate information under a world coordinate system and visual information;
determining a uncertainty of a projection point of the visual signpost, corresponding to each the feature point, in the current frame image.
correcting the position of the detection device according to the uncertainty of each the projection point.

10. The method according to claim 9, wherein the determining a visual signpost corresponding to each the feature point, comprising:
according to the position provided by the inertial measurement unit in the detection device, back-projecting each feature point and determining a nearest voxel grid where a projection ray corresponding to each the feature point intersects with the visual map, wherein the visual map is a three-dimensional map obtained based on a multi-frame image captured by the camera module;
determining, among all visual signposts within the nearest voxel grid corresponding to each the feature point, a visual signpost corresponding to the feature point.

11. The method according to claim 9, wherein before determining the uncertainty of the projection point of the visual signpost, corresponding to each feature point, in the current frame image, the method further comprises:
determining a co-vision image frame of a current image frame, wherein the image frame is the co-vision image frame when at least one of the visual signposts corresponding to any of the image frames is the same as the visual signposts corresponding to the current frame image;
obtaining a number of co-vision features of the current image frame and the co-vision image frame;
determining a target co-vision image frame, wherein the number of the co-vision features in the target co-vision image frame exceeds a predetermined threshold and is within a set consisting of a predetermined number of co-vision image frames arranged in descending order of the number of co-vision features;
determining a base matrix of the current image frame and the target co-vision image frame;
based on the base matrix and pairwise pole constraints, filtering the outliers in each second matching pair, wherein the second matching pair is composed of the feature points and corresponding the visual signposts.

12. The method according to claim 9, wherein the determining the uncertainty of a projection point of the visual signpost, corresponding to each the feature point, in the current frame image, comprising:
determining a first coordinate of the visual signpost corresponding to each the feature point in a camera coordinate system of the camera module, and a second coordinate in an image coordinate system of the current frame image, wherein the first coordinate is a three-dimensional coordinate and the second coordinate is a two-dimensional coordinate;
according to the first coordinate, the second coordinate and the normalized focal length of the camera module in a U axis and a V axis under the image coordinate system, the uncertainty of the projection point of a visual road marker corresponding to each feature point in the current frame image is determined.

13. The method according to claim 9, wherein before the correcting the position of the detection device according to the uncertainty of each the projection point, the method further comprises:
determining whether a degradation of the current frame image has occurred;
not correcting the position of the detection device if the current frame image is degraded;
if the current frame image is not degraded, proceeding to the step of correcting the position of the detection device according to the uncertainty of each the projection point.

14. The method according to claim 9, wherein the correcting the position of the detection device according to the uncertainty of each the projection point, comprising:
configuring the visual reprojection constraint observation equations as: $\left[\begin{matrix}0 \\ 0 \\ ⋮ \\ 0\end{matrix}\right] = \left[\begin{matrix}{e}_{1}^{T} {W}_{1}^{T} {W}_{1} {e}_{1} \\ {e}_{2}^{T} {W}_{2}^{T} {W}_{2} {e}_{2} \\ ⋮ \\ {e}_{A}^{T} {W}_{A}^{T} {W}_{A} {e}_{A}\end{matrix}\right]$
,
wherein ${e}_{A}^{T}$ is a transposition of the e_{A}, e_{A} is a reprojection error of a second matching pair of A, the second matching pair is a matching pair composed of the feature point and the corresponding visual sign,W_{A} is a constraint weight of the second matching pair A, ${W}_{A}^{T}$ as W_{A} the transpose;
correcting the position of the detection device according to the uncertainty of each the projection point with the visual reprojection constrained observation equation.

15. The detection device, comprises:
a laser detection module for acquiring point cloud data;
camera module for acquiring images;
an inertial measurement unit for providing a position of the detection device;
a control processing unit, comprising:
at least one processor and memory;
wherein the memory is coupled to the processor, the memory being used to store instructions or programs, when the instructions or programs are executed by the at least one processor, cause the at least one processor to perform a method of locating as claimed in any one of claims 1 to 14.
